Europäisches Patentamt

**European Patent Office**

**Office européen des brevets**

(11) Publication number: **0 262 099**
**A2**

## (12) EUROPEAN PATENT APPLICATION

(21) Application number: **87830193.6**

(51) Int. Cl.⁴: **G 02 C 5/22**

(22) Date of filing: **26.05.87**

(30) Priority: **23.09.86 IT 2317586**

(43) Date of publication of application:
**30.03.88 Bulletin 88/13**

(84) Designated Contracting States:
**AT BE CH DE ES FR GB LI SE**

(71) Applicant: **SAFILO S.p.A.**
**I-32044 Pieve di Cadore (Belluno) (IT)**

(72) Inventor: **Tabacchi, Vittorio**
**Piazza Tiziano, 7**
**I-32044 Pieve Di Cadore Belluno (IT)**

(74) Representative: **Perani, Aurelio et al**
**c/o JACOBACCI-CASETTA & PERANI S.N.C. Via Visconti di Modrone 7**
**I-20122 Milano (IT)**

(54) **A hinge for elastically articulating a leg to the face frame in optical frames.**

(57) A hinge for elastically articulating a leg (2) to the face frame (3) of an optical frame comprises a first hinge member (4) attached to the face frame (3) and shaped exteriorly as a cam profile (6a,b), a second hinge member (5,10) guided telescopically over the leg (2) and biased by a spring (22) toward a retracted position within the leg (2), and a shoe (25) attached to the leg (2) and biased, through the spring (22), against the cam profile (6a,b) of the first hinge member (4). The shoe (25) and spring (22) are both made to abut against a shoulder (16) formed on the leg (2) integrally therewith.

Fig-1

EP 0 262 099 A2

**Description**

This invention has fot its subject a hinge for elastically articulating a leg to the face frame in optical frames, comprising a first hinge member attached to the face frame and shaped exteriorly as a cam profile, a second hinge member guided telescopically over the leg and spring biased toward a retracted position within the leg, and a shoe attached to the leg and arranged to act on said cam profile.

Prior hinges of the same general type afforded preset stable positioning of an optical frame legs in either a folded attitude (to put the eyeglasses aside) or unfolded attitude (to put the eyeglasses on), and allow for elastic spreading of the legs by a short distance beyond their unfolded position.

Reliable performance of such hinges, i.e. their ability to perform consistently over time, forms one of the principal prerequisites by optical frame manufacturers.

Another basic requirement, and in a sense a conflicting one with the former, comes from the need to miniaturize both the hinge as a whole and its parts as much as feasible; by way of illustration, it will suffice to mention that cited shoe is usually no wider than 2-2.5 millimeters.

In accordance with prior teachings, it has been common practice to fasten the shoe to the leg by means of a throughgoing screw. The opposed shoe surface from the cam profile serves in this case as a shoulder for the spring of the second hinge member.

This prior approach makes it necessary for the shoe to be formed from a high strength material, such as hardened steel.

However, with a shoe made of steel, a like material must be also used for the first hinge member, or at least for that surface thereof which forms the cam profile.

Such a teaching is provided, for example, in Italian Patent Application No. 22325-B/81 by this same Applicant.

Outstanding among the main drawbacks of this approach are:

low fabricability of the materials employed, resulting inter alia in increased hinge manufacturing cost;

difficult assembly of the hinge component parts, and especially of the shoe; and

likelihood of the hinge jamming due to oxidation of its steel component parts.

It is the object of this invention to provide a hinge so constructed as to obviate all of the drawbacks affecting the cited prior art.

This object is achieved by a hinge of the kind described above being characterized in that it comprises a shoulder for said spring formed on said leg and being structurally independent of said shoe, said shoe being interposed to said shoulder and said first hinge member.

The invention features and advantages will be more clearly understood from the following detailed description of a preferred, though not exclusive, embodiment thereof, given here by way of illustration and not of limitation with reference to the accompanying drawings, where:

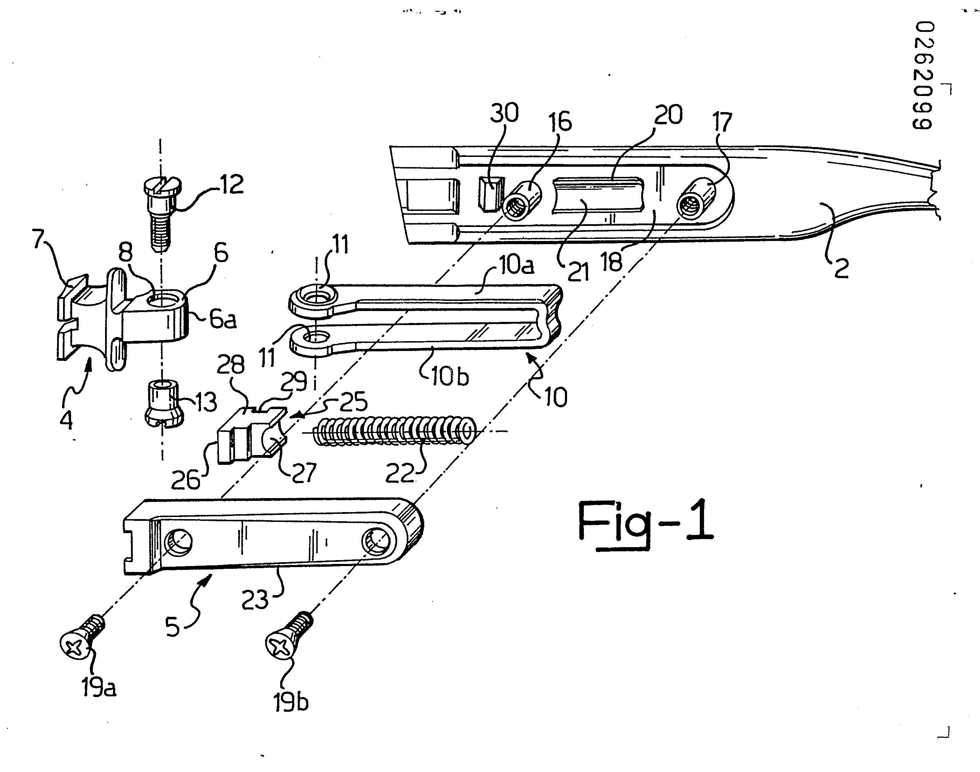

Figure 1 is an exploded perspective view of the component parts of a hinge according to the invention;

Figure 2 is a top view, in longitudinal section, of a detail of an optical frame incorporating the hinge of this invention; and

Figure 3 is an elevation view, in section, of the same detail as shown in Figure 2.

In the drawing figures, the reference numeral 1 generally denotes a hinge according to this invention for elastically articulating a leg 2 to the face frame 3 of an optical frame.

The hinge 1 comprises a first hinge member 4 and a second hinge member 5.

The first hinge member 4 consists of a small eye 6 and a mounting lug 7 for attachment to the face frame 3.

The eye 6 is formed exteriorly with surfaces 6a, 6b joined together at right angles and defining a cam profile. It is also penetrated by a through hole 8 whose axis lies parallel to the surfaces 6a,b.

The second hinge member comprises a tension brace 10 punched from sheet steel and bent over into a "U" with two legs 10a, 10b. In each free end of the two legs 10a,b of the "U" there is formed a countersunk hole 11. The tension brace 10 is connected to the eye 6 by means of a screw 12 and a nut screw 13, both having conical heads, which are passed through the holes 11 and 8 to form a hinge pin.

Formed integrally on a plate-like metal core 15 of the leg 2 are first and second bushes, respectively indicated at 16 and 17, standing orthogonally proud of a surface 18 of said core piece 15.

With the hinge assembled, the first bush 16 would intervene between the legs 10a,b of the brace 10.

At an intermediate location to the bushes 16 and 17, there is formed on the core 15 an elevation 20 defining a saddle 21 for accommodating a spring 22. The spring 22 extends between the bush 16, which forms a shoulder therefor, and the brace 10 to bias said brace toward a retracted position in the optical frame leg.

Both bushes, 16 and 17, are threaded internally for thread engagement with respective screws 19a, 19b securing a cap 23.

A shoe 25, preferably formed from a self-lubricating plastics such as that sold by DuPont under the "Vespel" trademark, is interposed to the eye 6 and the bush 16. The shoe 25 has a front surface 26 cooperating with the cam profile formed by the surfaces 6a, 6b, and is mating fit with an opposed surface thereof against the bush 16.

Said shoe 25 also has two opposed side surfaces 28 against which the legs 10a,b of the brace 10 are guided slidingly.

On its core 15 surface 18 side, the shoe 25 is provided with a seat 29 for a catch 30 formed on the core piece 15. On its opposite side, said shoe has a stepped profile 29.

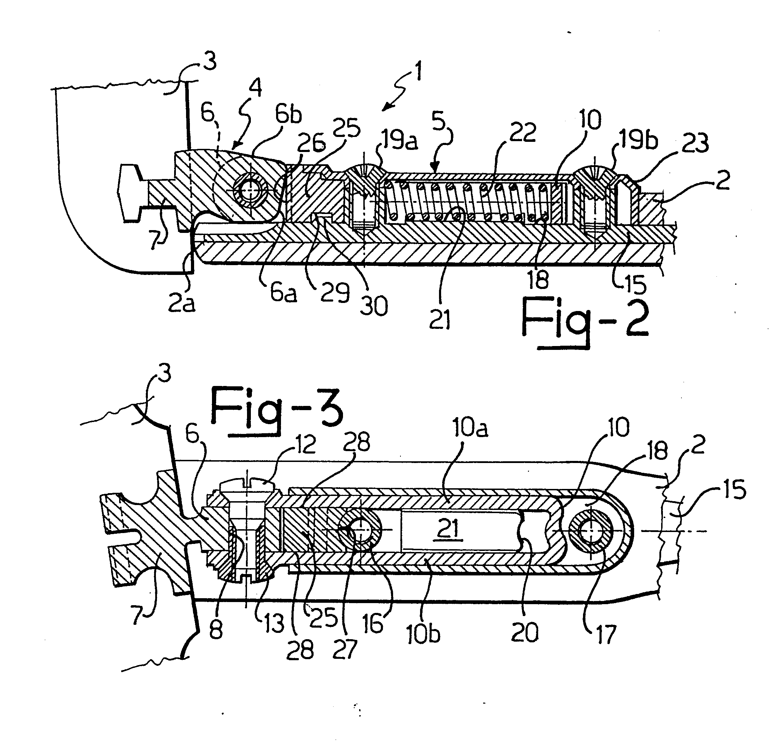

As shown in Figure 2, the cap 23 acts, upon the screw 18 being tightened down, as a retainer strap adapted to retain the shoe 25 onto the optical frame leg 2. The engagement of the catch 29 in the seat 30 is effective to prevent the shoe 25 from becoming lost.

With the optical frame legs 2 in their folded down positions against the face frame 3, the surface 26 of the shoe 25 is apt to lie in a first position of equilibrium over the surface 6b of the eye 6.

With the optical frame legs spread apart to wear the eyeglasses, the shoe 25 is caused to follow the cam profile of the surfaces 6a,6b and drive the leg 2 away from the hinge axis (the axis of the hole 8).

The spring 22 would be compressed through the brace 10 to slightly resist that movement.

On moving past the corner edge between the adjoining surfaces 6a and 6b, the elastic bias of the spring 22 on the brace 10 will urge the optical frame leg 2 to a second position of equilibrium (the unfolded position), with the shoe 25 held against the surface 6a of the eye 6.

In this condition, the free end 2a of the leg 2 facing the face frame 3 would virtually contact the latter. For this reason, should the leg 2 be pushed toward a more spread-apart attitude, the hinge 1 yields elastically while the spring 22 is compressed by the brace 10.

The spring 22 is guided, in its compression and expansion movements, by the saddle 21 defined on the elevation 20. The edge of the elevation 20 which confronts the bush 17 also provides a mechanical stop for the brace 10 against excessive spreading of the legs 2 apart.

The peculiar construction of the hinge according to this invention affords a number of advantages over prior hinges.

One of these advantages, related to the independent construction of the shoe, is that the shoe may be formed from a plastics material. This also enables less hard materials, such as nickel-silver, to be used for the first hinge member because the mechanical wear that such materials would undergo in the event of a rubbing contact with hard materials (conventional shoe made of steel) is practically nil where the rubbing contact occurs with plastics.

Furthermore, manufacture and assembly of this novel hinge are greatly simplified over conventional hinges.

## Claims

1. A hinge for elastically articulating a leg (2) to the face frame (3) in optical frames, comprising a first hinge member (4) attached to the face frame (3) and shaped exteriorly as a cam profile (6a,6b), a second hinge member (5,10) guided telescopically over the leg (2) and spring (22) biased toward a retracted position within the leg (2), and a shoe (25) attached to the leg (2) and arranged to act on said cam profile (6a,b), characterized in that it comprises a shoulder (16) for said spring formed on said leg (2) and being structurally independent of said shoe (25), said shoe (25) being interposed to said shoulder (16) and said first hinge member (4).

2. A hinge according to Claim 1, characterized in that the shoe (25) abuts against said shoulder (16) on the opposed side from said spring (22).

3. A hinge according to Claim 1, characterized in that the shoulder (16) comprises a threaded bush arranged to secure a protective cap (23) for the second hinge member (5,10).

4. A hinge according to Claim 3, characterized in that said bush (16) is formed integrally with a metal core (15) of said leg (2).

5. A hinge according to one or more of the preceding claims, characterized in that the shoe (25) is formed from plastics.

6. A hinge according to Claim 4, characterized in that on said metal core (15) there is formed an elevation (20) defining a saddle (21) for accommodating and guiding said spring (22) and adapted to provide a mechanical stop to said second hinge member (5,10).

Fig-1

0262099

Fig-2

Fig-3